# FASCICULE DE BREVET EUROPEEN

(11) **EP 1 948 507 B1**
(45) Date de publication et mention de la délivrance du brevet: **23.02.2011**
(21) Numéro de dépôt: 06830994.7
(22) Date de dépôt: 24.10.2006
(51) Int. Cl.: B64D 11/00

(54) **PORTE DE COFFRE A BAGAGES ET COFFRE A BAGAGES**
GEPÄCKRAUMTÜR UND GEPÄCKRAUM
LUGGAGE COMPARTMENT DOOR AND LUGGAGE COMPARTMENT

(30) Priorité: 28.10.2005 FR 0511026; 13.12.2005 US 749628 P; 20.12.2005 FR 0512989
(43) Date de publication de la demande: 30.07.2008
(73) Titulaire: Airbus, 31700 Blagnac Cédex (FR)
(72) Inventeur: BOCK, Thomas-Mathias, F-31330 Grenade-sur-Garonne (FR)
(74) Mandataire: Hartmann, Jean-Luc
(86) Numéro de dépôt international: PCT/FR2006/002378
(87) Numéro de publication internationale: WO 2007/048914

(56) Documents cités:
- EP-A- 0 614 806
- DE-A1- 4 425 869
- US-A- 5 456 529
- US-A- 5 868 353

## Description

La présente invention concerne une porte de coffre à bagages, notamment de coffre à bagages dans un aéronef, ainsi qu'un coffre à bagages correspondant.

Généralement, la section transversale d'un coffre à bagages dans un aéronef présente une forme sensiblement trapézoïdal, la grande base du trapèze formant la face inférieure du coffre à bagages. La partie inférieure du coffre à bagages est plus longue pour recevoir de gros bagages tandis que la partie supérieure est plus étroite pour permettre de retenir un éventuel bagage posé sur un autre bagage dans le coffre et éviter sa chute, notamment lors de l'ouverture de la porte du coffre à bagages.

Cette forme trapézoïdale imposée par des contraintes techniques est très contraignante pour définir l'esthétique du volume intérieur d'une cabine d'aéronef. Les coffres à bagages se trouvant juste en dessous du plafond, la jonction entre le coffre à bagages et le plafond forme un recoin peu esthétique.

La présente invention a alors pour but de fournir une porte de coffre à bagages qui permette de laisser libre cours pour définir la forme que les designers souhaitent donner à l'espace intérieur de l'aéronef.

A cet effet, elle propose un coffre à bagages comportant une porte permettant l'accès à un compartiment avec une face inférieure présentant une zone sensiblement plane à proximité de la porte, la porte présentant, en position de fermeture, un premier volet incliné vers l'intérieur du coffre à bagages par rapport à un plan perpendiculaire à la zone sensiblement plane de la face inférieure du coffre à bagages, ledit premier volet étant monté pivotant autour d'un premier axe.

Selon la présente invention, la porte d'accès du coffre à bagages comporte en outre un second volet disposé à l'extérieur du premier volet par rapport au coffre à bagages et articulé sur le premier volet, et le second volet s'étend, en position de fermeture du coffre à bagages, depuis un bord inférieur du coffre à bagages jusqu'à un bord de plafond.

Les premier et second volets de la définition ci-dessus constituent, avec d'autres éléments éventuels, une porte de coffre à bagages selon l'invention. Une porte de coffre à bagages de l'art antérieur ne comporte qu'un seul volet qui est généralement appelé aussi porte ou porte d'accès. Les deux volets de la porte du coffre à bagages coopèrent pour fermer le coffre à bagages. Un volet sert notamment à maintenir le(s) bagage(s) dans le coffre à bagages tandis que l'autre volet prend la forme souhaitée pour obtenir l'effet esthétique souhaité. Avec une telle porte présentant deux volets, on peut réaliser un aspect extérieur quelconque tout en garantissant un bon maintien des bagages à l'intérieur du coffre à bagages.

Dans un coffre à bagages selon l'invention, le second volet est, dans une forme de réalisation préférée, articulé sur le premier volet de manière à pouvoir pivoter par rapport à ce premier volet autour d'un second axe de pivotement sensiblement parallèle au premier. Dans cette forme de réalisation, les deux volets peuvent se rabattre l'une sur l'autre dans la position d'ouverture du coffre à bagages est ainsi dégager entièrement l'ouverture du coffre à bagages, facilitant l'accès à l'intérieur de celui-ci.

Dans une variante de réalisation, le premier volet ne ferme que partiellement le coffre à bagages. Ceci permet notamment d'incliner plus fortement le premier volet par rapport à la face inférieure du coffre à bagages et d'être ainsi plus efficace pour le maintien des bagages dans le coffre.

Pour faciliter la manoeuvre de la porte du coffre à bagages, ce dernier comporte avantageusement également des moyens permettant, lors de son ouverture, de maintenir le second volet en contact avec ledit bord de plafond. Le second volet est alors d'une part articulé sur le premier volet et d'autre part guidé sur le bord du plafond. Dans cette forme de réalisation, les moyens permettant de maintenir le second volet en contact avec le bord du plafond comportent par exemple un ressort agissant de manière à écarter le second volet du premier volet. Ce ressort est avantageusement intégré à l'articulation entre les deux volets de manière à limiter son encombrement et à mieux l'intégrer dans la porte.

Pour maintenir fermés les volets du coffre à bagages selon l'invention, des moyens de verrouillage sont par exemple disposés sur le second volet.

La présente invention concerne également une cabine d'aéronef, caractérisée en ce qu'elle comporte au moins un coffre à bagages tel que décrit ci-dessus ainsi qu'un aéronef comporte au moins un tel coffre à bagages.

Des détails et avantages de la présente invention ressortiront mieux de la description qui suit, faite en référence au dessin schématique annexé, sur
lequel :
La figure 1 est une vue en coupe transversale d'un coffre à bagages selon l'invention en position fermée,
Les figures 2 et 3 sont des vues correspondant à la figure 1, le coffre à bagages étant dans une position d'ouverture intermédiaire,
La figure 4 est une vue en coupe transversale d'un coffre à bagages selon l'invention en position entièrement ouverte,
La figure 5 est une vue en perspective d'un coffre à bagages selon l'invention en position fermée,
La figure 6 est une vue en perspective d'un coffre à bagages selon l'invention en position ouverte, et
Les figures 7 et 8 illustrent, en perspective, la mise en place de bagages dans le coffre à bagages des figures 5 et 6.

Un coffre à bagages selon l'invention comporte de manière classique une face inférieure 2, une face supérieure 4 et, entre la face inférieure 2 et la face supérieure 4, deux parois latérales 6 et une paroi de fond 8. L'accès au coffre à bagages se fait par la face opposée à la paroi de fond qui est munie d'une porte.

Le coffre à bagages représenté aux dessins se trouve dans une cabine d'aéronef, au-dessus de sièges (non représentés) se trouvant dans cette cabine, sous le plafond de celle-ci. Une paroi de plafond 10 est représentée sur les figures.

La face inférieure 2 du coffre à bagages est destinée à recevoir un (ou plusieurs) bagage(s) 12. Dans la forme de réalisation représentée, la face inférieure 2 est une face plane. Elle est légèrement inclinée par rapport à l'horizontale de manière à faciliter l'extraction du bagage 12 hors du coffre à bagages.

Les parois latérales 6, la paroi de fond 8 et la face supérieure 4 délimitent le volume du coffre à bagages. Ces parois peuvent être des parois propres au coffre à bagages, comme représenté ici. Il peut également s'agir de parois communes avec d'autres éléments comme par exemple un autre coffre à bagages. Le fond 8 peut être par exemple aussi la paroi latérale de la cabine d'aéronef, notamment pour des coffres à bagages se trouvant au-dessus de sièges disposés à proximité d'une telle paroi latérale. La face supérieure 4 quant à elle peut être une partie du plafond de la cabine d'aéronef.

Le coffre à bagages représenté aux dessins est fermé par une porte présentant deux volets : un premier volet 14 et un second volet 16.

Le second volet 16 constitue la partie visible de la porte du coffre à bagages pour l'utilisateur qui dispose un bagage 12 dans le coffre à bagages ou l'en retire. Ce second volet 16 relie la face inférieure 2 du coffre à bagages à la paroi de plafond 10 de la cabine d'aéronef. La forme de ce second volet 16 peut être adaptée à l'esthétique que l'on souhaite donner à l'intérieur de la cabine d'aéronef. Ce volet réalise ainsi de préférence une liaison esthétiquement harmonieuse entre un carénage 18 se trouvant généralement sous un coffre à bagages -et intégrant habituellement des éléments de confort, tels des éclairages, des bouches d'aération, etc.- et la paroi de plafond 10.

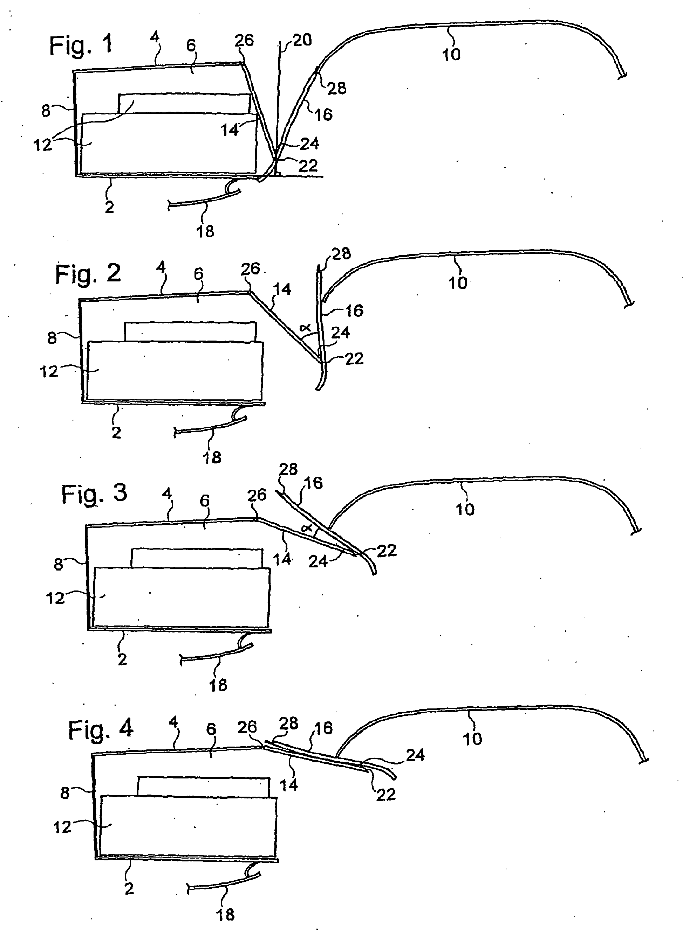

Le premier volet 14 est disposé entre le second volet 16 et le volume de rangement du coffre à bagages. Ce premier volet 14 n'est visible que lorsque le coffre à bagages est ouvert. Il est notamment destiné à maintenir le bagage 12 à sa place afin d'éviter la chute du bagage 12 hors du coffre à bagages, notamment lors de l'ouverture de la porte, en maintenant le bagage 12 à l'intérieur du coffre. Ce premier volet 14 est utile aussi dans le cas où, comme représenté sur les figures 1 à 4, un petit bagage 12 se trouve sur un autre bagage 12. Il apparaît clairement (figure 1) qu'en l'absence du premier volet 14, le petit bagage 12 supérieur risquerait de glisser jusqu'au second volet 16 et de culbuter. A l'ouverture de la porte, le passager recevrait alors sur lui ce petit bagage 12. Le premier volet 14 permet d'éviter efficacement une telle chute.

Le premier volet 14 est de forme globale sensiblement plane. Il est incliné par rapport à la face inférieure 2 du coffre à bagages vers l'intérieur du coffre, lorsque le coffre à bagages est en position fermée. Ainsi, l'angle formé par le plan contenant la face inférieure 2 et le plan contenant le premier volet 14 est inférieur à 90°. Dans le cas par exemple où le premier volet 14 n'est pas plan, on peut prévoir que ce premier volet 14 est placé, dans la position de fermeture de la porte du coffre à bagages, à l'intérieur d'un dièdre formé d'une part par la face inférieure 2 et d'autre part par un plan perpendiculaire 20 à la face inférieure 2 et passant par l'arête inférieure 22 du premier volet 14 (cf. figure 1).

Les premier et second volets 14 et 16 sont articulés l'un par rapport à l'autre au niveau de l'arête inférieure 22 du premier volet 14. Cette articulation peut être réalisée par exemple par une charnière reliant les deux volets. Elle permet le pivotement d'un volet par rapport à l'autre autour d'un premier axe 24 sensiblement horizontal.

Le premier volet 14 est également articulé autour d'un second axe 26, parallèle au premier axe 24. Ce second axe 26, également horizontal, correspond par exemple, comme représenté aux dessins, à l'arête supérieure du premier volet 14. L'articulation peut se faire au niveau de la face supérieure 4 du coffre à bagages. Dans l'exemple représenté, cette articulation se fait plus précisément à l'extrémité libre de la face supérieure 4 du coffre à bagages. Cette articulation pourrait, dans une autre forme de réalisation, être réalisée au niveau du plafond de la cabine d'aéronef.

Dans la position représentée sur la figure 1, correspondant à la position fermée de la porte du coffre à bagages, les deux volets 14 et 16 forment sensiblement un dièdre par rapport au premier axe 24. L'un des volets est essentiellement disposé d'un côté du plan perpendiculaire 20 à la face inférieure 2 du coffre à bagages tandis que l'autre volet est essentiellement disposé de l'autre côté de ce plan perpendiculaire 20.

Le premier volet 14 ne s'étend pas forcément, comme c'est le cas pour la forme de réalisation préférée représentée aux dessins, sur toute la hauteur du coffre à bagages dans la position de fermeture de celui-ci. Un espace peut subsister entre l'arête inférieure 22 du premier volet 14 et la face inférieure 2 du coffre à bagages. Cet espace est alors fermé par la partie inférieure du second volet 16. Cette forme de réalisation permet d'incliner le premier volet vers l'intérieur du coffre à bagages sans trop empiéter sur le volume intérieur de ce coffre. Dans un tel cas, un mécanisme de verrouillage (non représenté), permettant de maintenir la porte dans sa position fermée, est prévu sur la partie inférieure du second volet 16. Un tel mécanisme de verrouillage est connu de l'homme du métier et n'est pas décrit ici.

Pour réaliser la liaison entre le second volet 16 et la paroi de plafond 10, l'arête supérieure du second volet 16 comporte une feuillure 28, visible notamment sur les figures 2 à 4, recevant, en position de fermeture de la porte du coffre à bagages, le bord de la paroi de plafond 10 orienté vers le coffre à bagages.

Les figures 1 à 4, respectivement 4 à 1, illustrent l'ouverture et la fermeture respectivement de la porte décrite ci-dessus.

Comme déjà mentionné, la figure 1 représente la porte dans sa position de fermeture. Le bagage 12 repose sur la face inférieure 2. Le second volet 16 vient reposer d'une part au niveau de son arête supérieure et de sa feuillure 28 sur le bord correspondant de la paroi de plafond 10 et d'autre part son arête inférieure est maintenue par le mécanisme de verrouillage à proximité immédiate du bord libre de la face inférieure 2 du coffre à bagages. Le premier volet 14 quant à lui est maintenu entre ses deux articulations, une le reliant au second volet 16 et l'autre au bord libre de la face supérieure du coffre à bagages.

Pour ouvrir le coffre à bagages, le mécanisme de verrouillage est actionné pour déverrouiller le second volet 16. Un double mouvement est alors provoqué.

Selon un premier mouvement, le premier volet 14 et le second volet 16 pivotent l'un par rapport à l'autre autour du premier axe 24 en réduisant (lors de l'ouverture de la porte) l'angle α formé entre les deux volets. Selon un second mouvement, le premier volet 14 pivote autour du bord libre de la face supérieure 4, c'est-à-dire autour du second axe 26.

Ces deux mouvements sont simultanés. Au cours de ceux-ci, la face extérieure, c'est-à-dire la face visible, du second volet 16 reste au contact du bord libre de la paroi de plafond 10, bord libre qui prend place dans la feuillure 28 en position fermée de la porte du coffre à bagages.

Pour maintenir le contact entre le second volet 16 et le bord de la paroi du plafond 10, il est prévu des moyens élastiques entre les deux volets pour les maintenir écartés l'un de l'autre. De tels moyens ne sont pas représentés aux dessins. Ils peuvent être par exemple intégrés au niveau du premier axe d'articulation 24. Des moyens distincts peuvent également être prévus. D'autres moyens peuvent également être envisagés pour maintenir le contact entre le second volet 16 et la paroi de plafond. On peut ainsi par exemple prévoir sur le bord de la paroi de plafond 10 des moyens de guidage, le second volet 16 étant équipé de moyens complémentaires.

Lors de l'ouverture de la porte, comme illustré sur les figures, le second volet 16 se replie sur le premier volet 14. Le mouvement d'ouverture de la porte est stoppé lorsque les deux volets sont l'un contre l'autre et viennent butter contre le bord de la paroi de plafond 10. L'ouverture est alors maximale. Les deux volets étant l'un contre l'autre, l'ouverture est aussi grande que s'il n'y avait qu'un seul volet (et donc une porte classique de l'art antérieur).

La fermeture de la porte du coffre à bagages se réalise de la manière inverse de l'ouverture décrite ci-dessus et s'en déduit facilement.

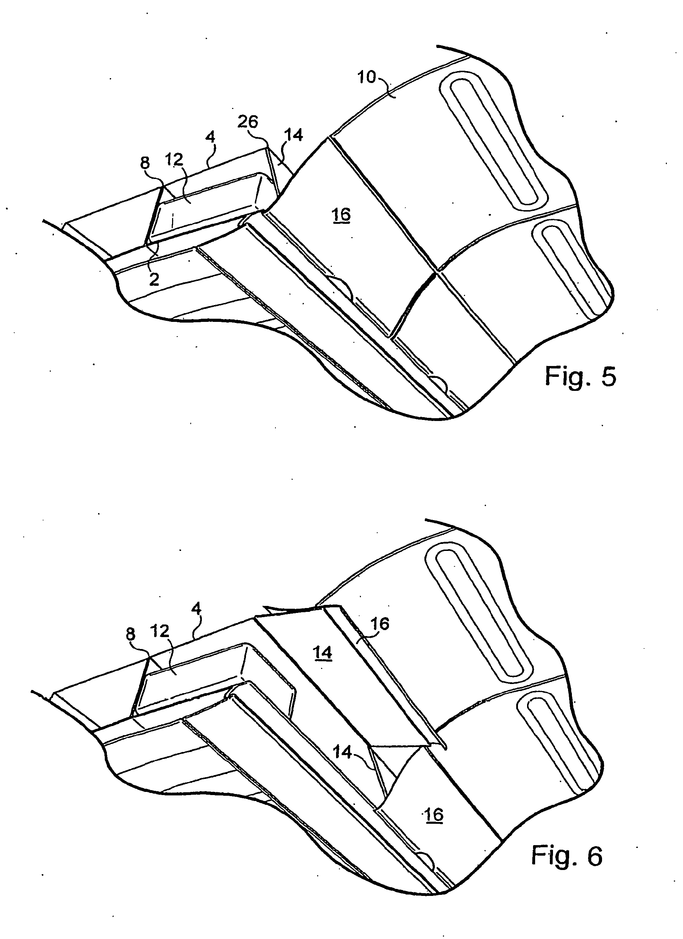

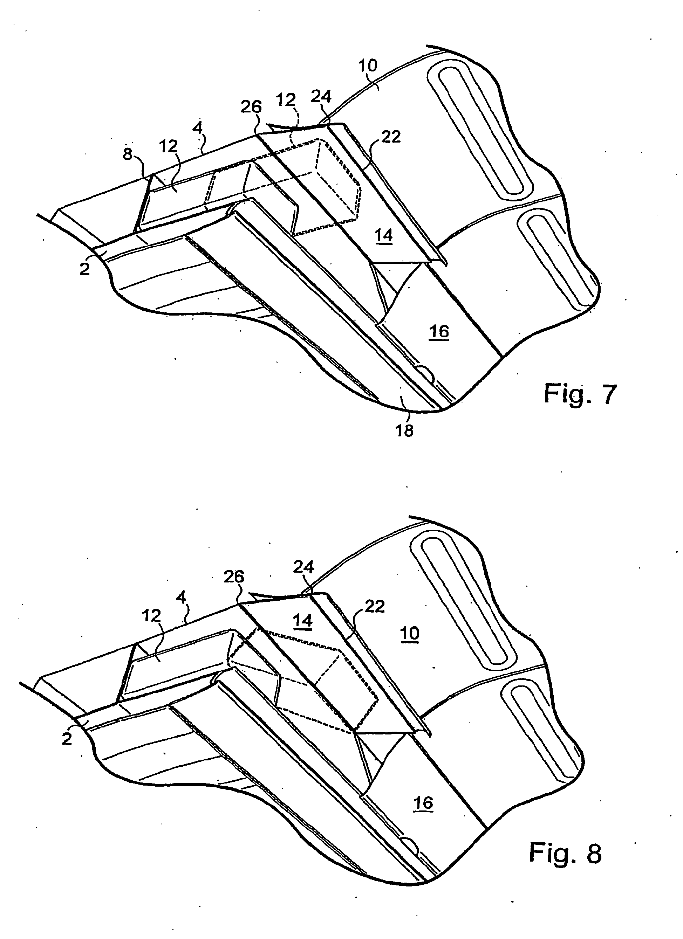

Les figures 5 à 8 montrent le coffre à bagages des figures 1 à 4 en perspective. On remarque sur ces figures que d'une part le second volet 16, seule partie visible de la porte du coffre à bagages dans la position fermée de celui-ci, permet de cacher esthétiquement le coffre à bagages et que d'autre part la porte selon invention ne gêne nullement le retrait (ou la mise en place) d'un bagage dans le coffre à bagages. Dans la position fermée de la porte, le premier volet 14, non visible de l'extérieur, maintient le bagage 12 dans le coffre à bagages. Le premier volet 14 est également efficace lorsque deux bagages, de plus petite taille que celui représenté, sont placés l'un sur l'autre. Le premier volet 14 limite alors le glissement du bagage se trouvant sur le dessus en direction de la porte du coffre à bagages.

Lorsque la porte décrite ci-dessus est dans sa position ouverte, elle vient s'escamoter vers le plafond libérant ainsi l'ouverture pour manoeuvrer les bagages destinés à venir prendre place dans le coffre à bagages correspondant.

La présente invention ne se limite pas à la forme de réalisation préférentielle décrite ci-dessus et aux variantes évoquées. Elle concerne également toutes les variantes de réalisation à la portée de l'homme du métier dans le cadre des revendications ci-après.

## Revendications

1. Coffre à bagages notamment pour aéronef comportant une porte permettant l'accès à un compartiment avec une face inférieure (2) présentant une zone sensiblement plane à proximité de la porte, la porte présentant, en position de fermeture, un premier volet incliné vers l'intérieur du coffre à bagages par rapport à un plan perpendiculaire (20) à la zone sensiblement plane de la face inférieure (2) du coffre à bagages, ledit premier volet (14) étant monté pivotant autour d'un premier axe (26),
**caractérisé en ce que** la porte d'accès comporte en outre un second volet (16) disposé à l'extérieur du premier volet (14) par rapport au coffre à bagages et articulé sur le premier volet (14), et **en ce que** le second volet (16) soit apte à s'étendre, en position de fermeture du coffre à bagages, depuis un bord inférieur du coffre à bagages jusqu'à un bord de plafond (10) de l'aéronef.

2. Coffre à bagages selon la revendication 1, **caractérisé en ce que** le second volet (16) est articulé sur le premier volet (14) de manière à pouvoir pivoter par rapport à ce premier volet (14) autour d'un second axe (24) de pivotement sensiblement parallèle au premier (26).

3. Coffre à bagages selon l'une des revendications 1 ou 2, **caractérisé en ce que** le premier volet (14) ne ferme que partiellement le coffre à bagages.

4. Coffre à bagages selon l'une des revendications 1 à 3, **caractérisé en ce que** le coffre à bagages comporte en outre des moyens permettant, lors de son ouverture, de maintenir le second volet (16) en contact avec ledit bord de plafond.

5. Coffre à bagages selon la revendication 4, **caractérisé en ce que** les moyens permettant de maintenir le second volet (16) en contact avec le bord du plafond (10) comportent un ressort agissant de manière à écarter le second volet (16) du premier volet (14).

6. Coffre à bagages selon la revendication 5, **caractérisé en ce que** le ressort est intégré à l'articulation entre les deux portes.

7. Coffre à bagages selon l'une des revendications 1 à 6, **caractérisé en ce que** des moyens de verrouillage sont disposés sur le second volet (16).

8. Cabine d'aéronef, **caractérisée en ce qu'**elle comporte au moins un coffre à bagages selon l'une des revendications 1 à 7.

9. Aéronef, **caractérisé en ce qu'**il comporte au moins un coffre à bagages selon l'une des revendications 1 à 7.

## Claims

1. Luggage bin in particular for aircraft comprising a door allowing access to a compartment with a lower face (2) having a substantially plane area near the door, the door having, in closing position, a first flap inclined toward the inside of the luggage bin in relation to a plane (20) perpendicular to the substantially plane area of the lower face (2) of the luggage bin, the said first flap 14 being pivotally mounted around a first axis (26),
**characterized in that** the access door moreover comprises a second flap (16) arranged outside the first flap (14) in relation to the luggage bin and articulated with the first flap (14), and **in that** the second flap (16) is adapted to extend, in closing position of the luggage bin, from a lower edge of the luggage bin to a ceiling edge (10) of the aircraft.

2. Luggage bin according to claim 1, **characterized in that** the second flap (16) is articulated with the first flap (14) so as to be able to pivot in relation to this first flap (14) around a second axis (24) of pivoting substantially parallel to the first (26).

3. Luggage bin according to one of claims 1 or 2, **characterized in that** the first flap (14) only partially closes the luggage bin.

4. Luggage bin according to one of claims 1 to 3, **characterized in that** the luggage bin moreover comprises means making it possible, at the time of opening thereof, to keep the second flap (16) in contact with the said ceiling edge.

5. Luggage bin according to claim 4, **characterized in that** the means making it possible to keep the second flap (16) in contact with the edge of the ceiling (10) comprise a spring acting so as to move the second flap (16) away from the first flap (14).

6. Luggage bin according to claim 5, **characterized in that** the spring is integrated into the articulation between the two doors.

7. Luggage bin according to one of claims 1 to 6, **characterized in that** the locking means are arranged on the second flap (16).

8. Aircraft cabin, **characterized in that** it comprises at least one luggage bin according to one of claims 1 to 7.

9. Aircraft, **characterized in that** it comprises at least one luggage bin according to one of claims 1 to 7.

## Patentansprüche

1. Gepäckraum insbesondere für ein Flugzeug, umfassend eine Tür, die ein Abteil mit einer Unterseite (2) zugänglich macht, die in Nähe der Tür eine im Wesentlichen ebene Zone aufweist, wobei die Tür in Verschlussstellung einen ersten Flügel aufweist, der auf das Innere des Gepäckraums zu bezüglich einer Ebene (20) geneigt ist, die zu der im Wesentlichen ebenen Zone der Unterseite (2) des Gepäckraums senkrecht ist, wobei der erste Flügel (14) um eine erste Achse (26) verschwenkbar montiert ist,
**dadurch gekennzeichnet, dass** die Zugangstür außerdem einen zweiten Flügel (16) umfasst, der bezüglich des Gepäckraums außerhalb des ersten Flügels (14) angeordnet ist und an dem ersten Flügel (14) angelenkt ist, und dass der zweite Flügel (16) vorgesehen ist, um sich in der Verschlussstellung des Gepäckraums von einem unteren Rand des Gepäckraums bis zu einem Deckenrand (10) des Flugzeuges zu erstrecken.

2. Gepäckraum nach Anspruch 1, **dadurch gekennzeichnet, dass** der zweite Flügel (16) an dem ersten Flügel (14) so angelenkt ist, dass er sich bezüglich des ersten Flügels (14) um eine zweite Schwenkachse (24) verschwenken kann, die zur ersten (26) im Wesentlichen parallel ist.

3. Gepäckraum nach einem der Ansprüche 1 oder 2, **dadurch gekennzeichnet, dass** der erste Flügel (14) den Gepäckraum nur teilweise verschließt.

4. Gepäckraum nach einem der Ansprüche 1 bis 3, **dadurch gekennzeichnet, dass** der Gepäckraum außerdem Mittel umfasst, die es bei seiner Öffnung gestatten, den zweiten Flügel (16) mit dem Deckenrand in Kontakt zu halten.

5. Gepäckraum nach Anspruch 4, **dadurch gekennzeichnet, dass** die Mittel, die es gestatten, den zweiten Flügel (16) mit dem Rand der Decke (10) in Kontakt zu halten, eine Feder umfassen, die so wirkt, dass sie den zweiten Flügel (16) von dem ersten Flügel (14) entfernt.

6. Gepäckraum nach Anspruch 5, **dadurch gekennzeichnet, dass** die Feder in das Gelenk zwischen den beiden Türen integriert ist.

7. Gepäckraum nach einem der Ansprüche 1 bis 6, **dadurch gekennzeichnet, dass** an dem zweiten Flügel (16) Verriegelungsmittel angeordnet sind.

8. Flugzeugkabine, **dadurch gekennzeichnet, dass** sie mindestens einen Gepäckraum nach einem der Ansprüche 1 bis 7 umfasst.

9. Flugzeug, **dadurch gekennzeichnet, dass** es mindestens einen Gepäckraum nach einem der Ansprüche 1 bis 7 umfasst.
